# EUROPEAN PATENT APPLICATION

(11) **EP 1 061 633 A1**
(43) Date of publication of application: **20.12.2000**
(21) Application number: 00110979.2
(22) Date of filing: 29.05.2000
(51) Int. Cl.: H02K 7/118

(54) **Rotor of synchronous permanent-magnet motor with preset direction of rotation**

(30) Priority: 18.06.1999 IT MI991375
(71) Applicant: SICCE S.p.A., 36061 Bassano del Grappa (Vicenza) (IT)
(72) Inventor: Pettenon, Paolo, 35013 Cittadella (Province of Padova) (IT)
(74) Representative: Modiano, Guido, Dr.-Ing.

(57) **Abstract**

A rotor (1) of synchronous permanent-magnet motor with preset direction of rotation, comprising a shaft (2) which is connected to a load (3) so as to allow free mutual rotation through a preset angle. The rotor further comprises positioning means (20) which are adapted to arrange the shaft (2) in a preset angular position with respect to the load (3) when at rest.

## Description

The present invention relates to a rotor of synchronous permanent-magnet motor with preset direction of rotation.

It is known that synchronous permanent-magnet motors currently use rotors in which the shaft is connected to the load with the so-called lead-angle method, i.e., so that the shaft and the load can rotate freely with respect to each other through a preset angle, so that the motor can begin to turn without being subjected to stress.

In order to achieve starting always in the same direction of rotation, the solutions of the prior art use unidirectional cams which lead to a structure which is very complicated and not always functional.

Moreover, after the first turn there is a violent impact between the shaft and the load and therefore it is not possible to turn considerable loads.

The aim of the present invention is to eliminate the above-noted drawbacks, by providing a rotor of synchronous permanent-magnet motor with preset direction of rotation which allows to considerably simplify the structure while maintaining high reliability in operation.

Within the scope of this aim, an object of the present invention is to provide a rotor in which it is possible to eliminate the violent impact after the lead angle, by providing a rotor in which the positive torque can overcome the negative torque and turn the load by accelerating it very gradually, thus allowing to turn higher loads than with solutions using the conventional lead-in turn.

Another object of the present invention is to provide a rotor of synchronous permanent-magnet motor with preset direction of rotation which by way of its particular constructive characteristics is capable of giving the greatest assurances of reliability and safety in use.

Another object of the present invention is to provide a rotor of synchronous motor which can be easily obtained starting from commonly commercially available elements and materials and is also competitive from a merely economical point of view.

This aim, these objects and others which will become apparent hereinafter are achieved by a rotor of synchronous permanent-magnet motor with preset direction of rotation, comprising a shaft which is connected to a load so as to allow free mutual rotation through a preset angle, characterized in that it comprises positioning means which are adapted to arrange said shaft in a preset angular position with respect to said load when at rest.

Further characteristics and advantages of the present invention will become apparent from the following detailed description of a preferred but not exclusive embodiment of a rotor of synchronous permanent-magnet motor with preset direction of rotation, illustrated only by way of non-limitative example in the accompanying drawings, wherein:

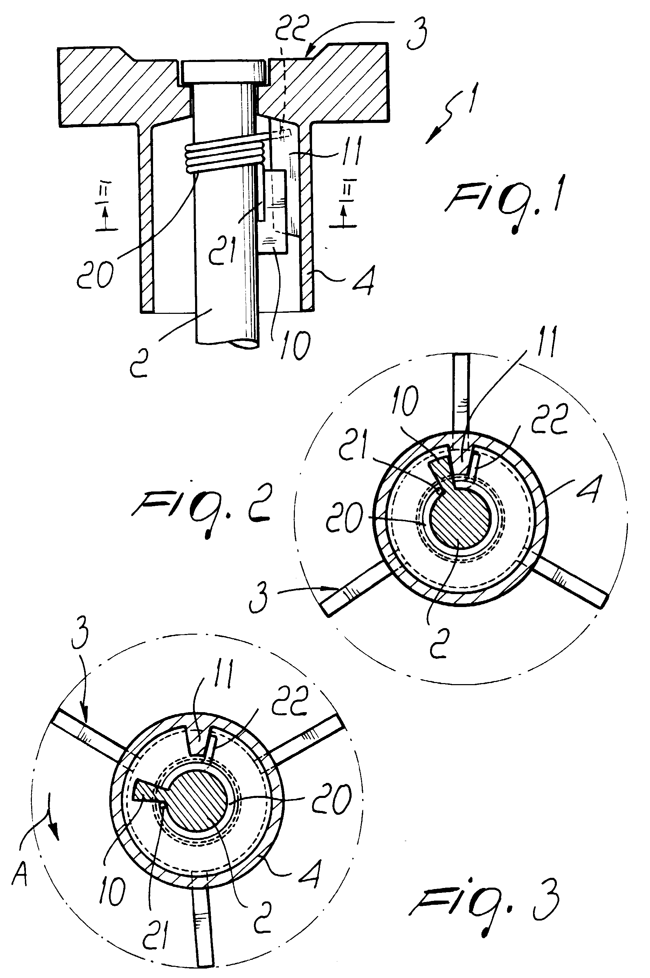

Figure 1 is a schematic sectional view, taken along a diametrical plane, of the rotor according to the present invention;
Figure 2 is a sectional view, taken along the line II-II of Figure 1, with the rotor at rest;
Figure 3 is a sectional view, taken along the line II-II, during the starting of the rotor.

With reference to the above figures, the rotor of synchronous permanent-magnet motor with preset direction of rotation according to the invention, generally designated by the reference numeral 1, comprises a shaft 2 on which a load 3, constituted for example by a pump impeller, is rotatably connected.

The load 3 is associated with the shaft 2 with the so-called lead angle method, i.e., so that the shaft and the load can rotate with respect to each other through a preset angle.

This possibility of rotation is provided by the presence of a first key 10 or driving key, which protrudes radially from the shaft 2, and of a second key or driven key 11, which protrudes radially from a lateral wall 4 of the load 3, such keys interfering with each other.

The particularity of the invention consists in that positioning means are provided being designed to arrange the shaft 2 and the load 3 always in a preset mutual angular position when at rest.

The positioning means are provided by elastic means, advantageously constituted by a coiled wire spring 20 which is supported by the shaft 2 and having a first end 21 which couples to the first key 20 and a second end 22 which couples to the key 11.

The elastic means are designed to return the key 10 into contact with the key 11, always on the same side, when at rest.

When the motor is initially actuated, when the motor attempts to start in the direction in which the load is applied, due to the mutual coupling between the keys 10 and 11 it cannot pick up, since the negative torque constituted by the load plus the inertial component is too high.

Necessarily, therefore, when the motor starts, it has a portion of a free turn available, designated by the arrow A in Figure 3, during which in practice it needs to overcome only the inertial component and the reduced initial resistance of the elastic element.

The resistance of the elastic element increases gradually as the covered angle increases.

By appropriately selecting the elastic constant of the elastic element, the positive torque is able to overcome the negative torque and turn the load, accelerating more gradually than the conventional lead-angle technique, in which the load is applied by sudden impact.

With the described arrangement, therefore, in addition to starting always in the same chosen direction it is also possible to turn higher loads, by way of the gradual nature of the coupling that is obtained.

During steady-state operation, the first key or driving key 10, after covering the lead angle, makes contact with the second key or driven key 11, and bears the load 3 directly, except for the portion due to the elastic element 20, which remains tensioned.

When the supply of electric power ceases, the elastic element 20, once the rotor has stopped, always returns the shaft 2 and the load 3 to the same mutual angular position, so that the direction of rotation at pickup is always ensured.

From the above description it is thus evident that the invention achieves the intended aim and objects, and in particular the fact is stressed that a rotor solution is provided which allows to simplify the structure, obtaining, in addition to rotation in a preset direction, also the possibility of gradual application of the load, avoiding the impact with the load that is typical of so-called lead-angle solutions.

The invention thus conceived is susceptible of numerous modifications and variations, all of which are within the scope of the inventive concept.

All the details may furthermore be replaced with other technically equivalent elements.

In practice, the materials used, as well as the contingent shapes and dimensions, may be any according to requirements.

The disclosures in Italian Patent Application No. M199A001375 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A rotor of synchronous permanent-magnet motor with preset direction of rotation, comprising a shaft which is connected to a load so as to allow free mutual rotation through a preset angle, characterized in that it comprises positioning means which are adapted to arrange said shaft in a preset angular position with respect to said load when at rest.

2. The rotor according to claim 1, comprising a first key or driving key, which protrudes substantially radially from said shaft, and a second key or driven key, which protrudes radially from a lateral surface of the load, said keys being adapted to produce mutual interference for moving said load.

3. The rotor according to claim 1, characterized in that said positioning means comprise elastic means which are adapted to arrange said keys side by side when at rest.

4. The rotor according to claim 3, characterized in that said elastic means comprise a coiled wire spring which is supported by said shaft and has a first end which can be coupled to said first key and a second end which can be coupled to said second key.

5. The rotor according to claim 1, characterized in that in operating conditions said first key is laterally adjacent to said second key on an opposite side with respect to a side on which said first key is laterally adjacent when at rest.
